# EUROPEAN PATENT SPECIFICATION

(11) **EP 4 591 770 B1**
(45) Date of publication and mention of the grant of the patent: **04.11.2026**
(21) Application number: 23877573.8
(22) Date of filing: 27.09.2023
(51) Int. Cl.: A47L 9/24, A47L 9/04, A47L 5/26, F16L 35/00, F16L 27/12

(54) **VACUUM CLEANER NOZZLE**
STAUBSAUGERDÜSE
EMBOUT D'ASPIRATEUR

(30) Priority: 11.10.2022 KR 20220129864
(43) Date of publication of application: 30.07.2025
(73) Proprietor: LG Electronics Inc., Yeongdeungpo-gu Seoul 07336 (KR)
(72) Inventor: RYOU, Kyoungho, Seoul 08592 (KR); KO, Moohyun, Seoul 08592 (KR); KIM, Sungjun, Seoul 08592 (KR); LEE, Kookhaeng, Seoul 08592 (KR)
(74) Representative: Vossius & Partner Patentanwälte Rechtsanwälte mbB
(86) International application number: PCT/KR2023/014983
(87) International publication number: WO 2024/080645

(56) References cited:
- JP-A- 2000 225 079
- JP-B2- 4 678 682
- KR-A- 20060 083 095
- KR-A- 20220 112 425
- US-A1- 2002 042 969
- US-A1- 2018 255 992
- US-A1- 2020 315 414
- US-B2- 6 553 613

## Description

### Technical Field

The present invention relates to a cleaner nozzle and, more particularly, to a cleaner nozzle that sucks in dust from a floor surface by rotating two agitators.

### Background Art

A vacuum cleaner is a device that uses suction power generated from a suction motor mounted inside a cleaner body to suck in dust and air, and separates the dust from the air to collect the dust.

A suction nozzle refers to a part that touches the floor and directly sucks in dust and air. The suction power generated from the suction motor mounted inside the cleaner body is transmitted to the suction motor, and the dust and air are sucked into the suction nozzle by this suction power.

An agitator is installed in the suction nozzle. The agitator rotates to scrape away dust from the floor or carpet, improving cleaning performance.

A cleaner head may rotate about a plurality of axes for steering. Hereinafter, the plurality of axes is defined assuming that a side to which the cleaner head moves forward is a front. Rolling refers to a state in which left and right ends of the cleaner head rotate up and down about a front-to-back axis thereof. Pitching refers to a state in which the front and rear ends of the cleaner head rotate up and down about a left-to-right axis thereof. Yawing refers to a state in which the left and right ends rotate forward and backward about a vertical axis.

As prior art 1, Korean Patent No. 10-1814568 is presented. Prior art 1 relates to a cleaner head for a vacuum cleaner. According to prior art 1, the cleaner head is provided with a first debris opening, and a second debris opening arranged above the first debris opening. Accordingly, dust brushed off by the agitator is sucked into the cleaner body through the first debris opening or the second debris opening. According to prior art 1, a pitching axis and a yawing axis are arranged between the cleaner head and an extension tube. The cleaner body can rotate around the pitching axis to change height thereof and rotate around the yawing axis to change a lateral position thereof.

In general, for left and right steering, the cleaner head performs either rolling or yawing. In prior art 1, the cleaner head performs yawing rather than rolling. When the cleaner head performs yawing, the cleaner head has the advantage of good maneuverability, but the disadvantage of poor straightness.

The cleaner head according to prior art 1 has no configuration to resist movement about the yawing axis. Accordingly, when the floor surface is uneven, the cleaner head may often wobble, and as the cleaner head wobbles, the cleaner cannot move straight but turns to the left or right. Therefore, a user had to perform unnecessary operations to move the cleaner in a straight line.

Even when the body of the cleaner according to prior art 1 is laid down as much as possible, the above problem becomes more severe. If the body of the cleaner is upright and an angle between the yawing axis and the ground is low, the cleaner can move forward to a certain extent due to the weight of the cleaner body even if the cleaner head wobbles. However, as the body of the cleaner is laid down and the angle between the yawing axis and the ground increases, the cleaner head wobbles violently about the yawing axis even if the cleaner head wobbles only slightly, and this is very inconvenient when narrow and low gaps are cleaned.

Prior art 2 is disclosed in U.S. Patent Application Publication No. 2007-0174994. Prior art 2 is an invention relating to a cleaner head of a canister cleaner, and discloses the cleaner head having a rolling function and a pitching function. According to prior art 2, the invention relates to a cleaner in which the cleaner head can be fixed in a folded state centered on a pitching axis and mounted on the cleaner body, and the cleaner head is unfolded to perform cleaning.

However, prior art 2 discloses a structure in which the cleaner head is folded and fixed when the cleaner is mounted after cleaning, and the cleaner head is unfolded and fixed when cleaning is intended to be done, but does not disclose a structure for selectively limiting the rolling or pitching of the cleaner in use, wherein the cleaner head performs only rolling, not yawing, so aside from the advantage of excellent straightness, the cleaner head has the disadvantage of poor operability.

US 6 553 613 B2 describes an electric vacuum cleaner including rotatable connection pipes that form a dust suction passage.

US 2020/0315414 A1 describes a floor tool unit including a floor tool, a support member, and a tube member extending through a coupling member.

US 2002/0042969 A1 describes a vacuum cleaner nozzle unit including first and second pipes that are rotatably connected to form an air flow passage.

### Disclosure

### Technical Problem

The present invention has been made keeping in mind the above problems occurring in the prior art, and an objective of the present invention is to provide a cleaner nozzle capable of laying a cleaner body and a pipe connecting the cleaner body and the cleaner nozzle close to the ground.

In addition, an objective of the present invention is to provide a cleaner nozzle capable of reducing an output required for a motor while two agitators are rotated.

In addition, an objective of the present invention is to provide a cleaner nozzle capable of preventing a large load from being applied to a motor due to friction between the agitator and the ground even when the cleaner nozzle is pressed downward during a cleaning process.

In addition, an objective of the present invention is to provide a cleaner nozzle having an extension tube capable of rolling, pitching and yawing, wherein a nozzle housing is prevented from unnecessarily wobbling left and right about a yawing axis when moving straight.

The objectives of the present invention are not limited to the objectives mentioned above, and other objectives not mentioned will be clearly understood by those skilled in the art from the description below.

### Technical Solution

In order to accomplish the above objectives, the cleaner nozzle of the present invention includes: a nozzle housing having a suction port through which air containing dust is introduced; a button operating member formed on one side of the nozzle housing; and a connection tube having a flow path formed to communicate with the suction port. The connection tube includes: a rotating steering part arranged to be rotatable about a rotation axis thereof; a fixed steering part rotatably coupled to the rotating steering part; and a locking part configured to selectively secure the fixed steering part to the rotating steering part. The locking part includes: a button arranged on the rotating steering part and operated by the button operating member when an angle between a ground and the connection tube is equal to or less than a predetermined angle; and a stopper operated by the operation of the button, with at least a portion of the stopper inserted into a stopper receiving part formed in the fixed steering part when the button is not operated and pulled out from the stopper receiving part when the button is operated.

The cleaner nozzle may include a first agitator rotatably coupled to the nozzle housing, and a second agitator rotatably coupled to the nozzle housing. In this case, the suction port may be formed between the first agitator and the second agitator, and a diameter of the first agitator may be different from a diameter of the second agitator, and an upper surface of the nozzle housing may be formed to be inclined at a predetermined angle to the ground on the basis of a state in which the first agitator and the second agitator are in contact with the ground.

According to a first embodiment, the button may be operated by being pressed in a direction intersecting a moving direction thereof. In this case, the locking part may have a hole formed in the button thereof. In addition, the locking part may further include a release hook arranged on the button operating member and configured to move the button when the release hook is inserted into the hole of the button.

According to a second embodiment, the stopper may include: a hinge coupled to the rotating steering part and configured to serve as a center shaft of rotation; a button close-contact part extending radially outward from the hinge of the stopper, being in close contact with the button, and configured to rotate about the hinge of the stopper when the button is operated; and an insertion part extending from the hinge of the stopper in a direction different from a direction in which the button close-contact part extends, and configured to be inserted into **a recess** formed in the fixed steering part when the button is not operated.

According to a third embodiment, the locking part may include a pinion gear-engaged with at least one of the button and the stopper and configured to transmit power of the button to the stopper.

According to a fourth embodiment, the locking part may include: a transmission gear configured to transmit power of the button to the stopper; and a first guide protruding from a first surface of the transmission gear, connected to the button, and configured to rotate the transmission gear when the button is operated. In this case, the locking part may include a second guide protruding from a second surface of the transmission gear, connected to the stopper, and configured to move the stopper when the transmission gear rotates.

According to a fifth embodiment, the locking part may include: a wire connected to the stopper; and a wire drum on which the wire is wound and which applies an external force to the stopper in a direction in which the stopper is pulled out.

The fixed steering part may be a third steering part, and the rotating steering part may be a second steering part.

The button may be inserted into the rotating steering part while being pressed by the button operating member during the operation of the button, and the stopper may be pulled out from **a recess** formed in the fixed steering part while being inserted into the rotating steering part during the operation of the button. In this case, a direction in which the button is inserted and a direction in which the stopper is inserted may be opposite to each other.

### Advantageous Effects

As described above, according to the cleaner nozzle of the present invention, the two agitators are configured to have different diameters so that an inclined surface is formed on the upper surface of the nozzle housing, so a pipe can be laid down toward the agitator with a smaller diameter, thereby lowering the overall height of the cleaner nozzle, and keeping the pipe close to the ground. Accordingly, it is possible to clean by pushing the cleaner nozzle deep into a low-height space under furniture.

In addition, by making the diameters of the two agitators different, torque applied to the agitator with a smaller diameter can be reduced, thereby lowering output required for a motor. Accordingly, it is possible to reduce the amount of power consumed by the cleaner nozzle.

When the cleaner nozzle is pressed downward, the caster and the second agitator are strongly pressed against the ground, thereby reducing the increase of friction between the first agitator and the ground. Accordingly, it is possible to prevent a large load from being applied to the motor due to friction between the first agitator and the ground.

In addition, in the cleaner nozzle performing pitching and yawing, the cleaner nozzle is prevented from wobbling arbitrarily, thereby preventing straightness thereof from deteriorating.

### Description of Drawings

FIG. 1 is a perspective view illustrating a cleaner according to an embodiment of the present invention.
FIG. 2 is a perspective view illustrating a cleaner nozzle according to an embodiment of the present invention.
FIG. 3 is a bottom view of FIG. 2.
FIG. 4 is a cross-sectional view illustrating the position of a connection tube coupling part in FIG. 3.
FIG. 5 is a cross-sectional view illustrating a caster reception part in FIG. 3.
FIG. 6 is a drawing illustrating the positional relationship of a virtual caster passage surface, a virtual agitator passage surface, and a virtual connection tube connecting surface in a cleaner nozzle according to an embodiment of the present invention.
FIG. 7 is a drawing illustrating the steering direction of a connection tube in a cleaner nozzle according to an embodiment of the present invention.
FIG. 8 is a bottom view illustrating the connection tube in a cleaner nozzle according to an embodiment of the present invention.
FIG. 9 is a partially enlarged view illustrating a locking part and a connection tube fastening part in a cleaner nozzle according to an embodiment of the present invention.
FIG. 10 is a side view illustrating a state in which a locking part and a connection tube fastening part are combined in a cleaner nozzle according to an embodiment of the present invention.
FIGS. 11a and 11b are partial cross-sectional views illustrating a locking part and a connection tube fastening part in a cleaner nozzle according to an embodiment of the present invention.
FIG. 12 is a partially enlarged view showing a locking part and a connection tube fastening part in the cleaner nozzle according to a first embodiment of the present invention.
FIGS. 13a and 13b are schematic diagrams illustrating the locking part and the connection tube fastening part in the cleaner nozzle according to the first embodiment of the present invention.
FIGS. 14a and 14b are bottom views of a locking part in a cleaner nozzle according to a second embodiment of the present invention.
FIGS. 15a and 15b are bottom views of a locking part in a cleaner nozzle according to a third embodiment of the present invention.
FIGS. 16a and 16b are drawings approximately illustrating the locking part in the cleaner nozzle according to the third embodiment of the present invention.
FIGS. 17a and 17b are bottom views of a locking part in a cleaner nozzle according to a fourth embodiment of the present invention.
FIGS. 18a and 18b are drawings approximately illustrating the locking part in the cleaner nozzle according to the fourth embodiment of the present invention.
FIGS. 19a and 19b are schematic diagrams illustrating a locking part in a cleaner nozzle according to a fifth embodiment of the present invention.

### Best Mode

Hereinbelow, exemplary embodiments of the present invention will be described in detail with reference to the accompanying drawings.

The present invention may be modified in various ways and implemented by various embodiments, so that specific embodiments are shown in the drawings and will be described in detail. However, it is to be understood that the present invention is not limited to the specific exemplary embodiments, but includes all modifications, equivalents, and substitutions included in the scope of the present invention.

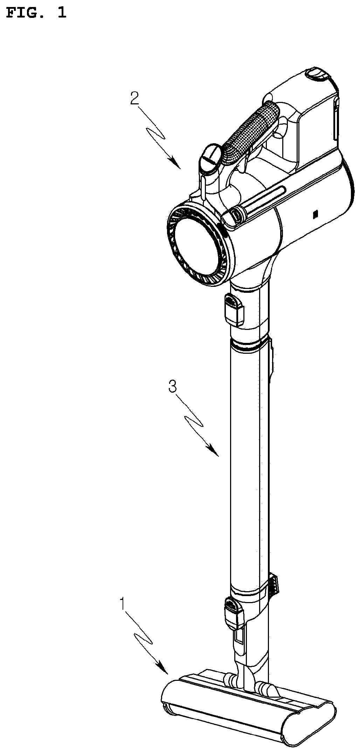

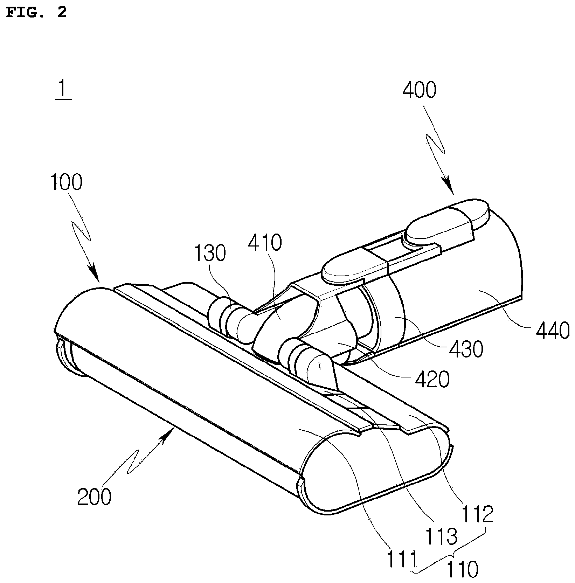

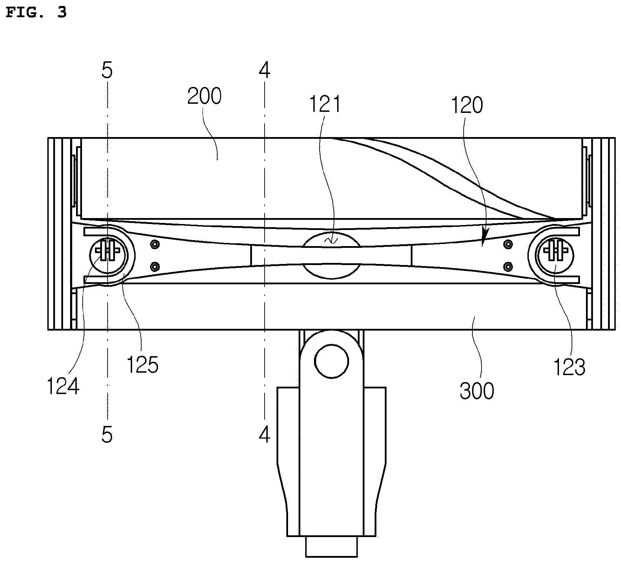

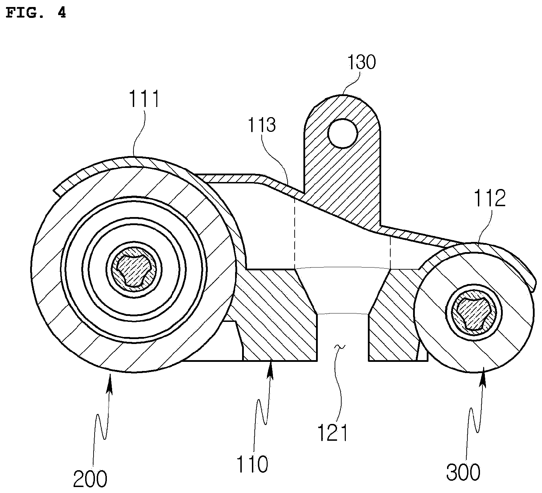

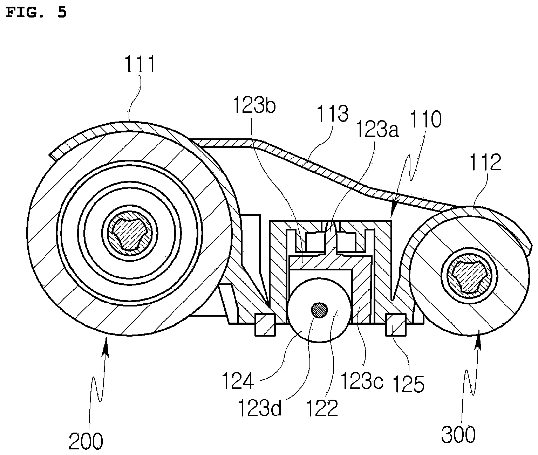

FIG. 1 is a perspective view illustrating a cleaner according to an embodiment of the present invention, FIG. 2 is a perspective view illustrating a cleaner nozzle according to an embodiment of the present invention, FIG. 3 is a bottom view of FIG. 2, FIG. 4 is a cross-sectional view illustrating the position of a connection tube coupling part in the cleaner nozzle according to an embodiment of the present invention, and FIG. 5 is a cross-sectional view illustrating a caster reception part in the cleaner nozzle according to an embodiment of the present invention.

Referring to FIGS. 1 to 5, a cleaner nozzle 1 of the present invention is described as follows.

The cleaner nozzle 1 of this embodiment may be connected to and used with, for example, a handheld cleaner or a canister-type cleaner.

Additionally, in this specification, "a floor surface" may be understood to refer not only to the floor surface of a living room or room, but also to a cleaning surface such as a carpet.

That is, the cleaner nozzle 1 may be removably connected to a cleaner body 2 or an extension tube 3. The cleaner nozzle 1 may be connected to the cleaner body 2 or the extension tube 3, so that a user may clean the floor surface by using the cleaner nozzle 1. In this case, the cleaner body 2, to which the cleaner nozzle 1 is connected, may separate dust in the air by using a multi-cyclone method.

The cleaner nozzle 1 may be operated by receiving power from the cleaner body 2. Specifically, the cleaner nozzle 1 may be operated by receiving power from a battery (not shown) provided in the cleaner body 2.

The cleaner body 2 to which the cleaner nozzle 1 is connected includes the suction motor (not shown), so that suction force generated by the suction motor (not shown) may be applied to the cleaner nozzle 1.

Accordingly, in this embodiment, the cleaner nozzle 1 may function to suck in foreign substances and air from the floor surface and guide them to the cleaner body 2.

The cleaner nozzle 1 according to an embodiment of the present invention includes a nozzle housing 100, a first agitator 200, a second agitator 300, and the connection tube 400.

For reference, directions used in the present invention are described as follows.

In the present invention, the direction of the cleaner nozzle 1 may be defined with respect to a suction port 121. Specifically, a side at which the first agitator 200 is arranged with respect to the suction port 121 may be called the front of the cleaner nozzle 1, and a side at which the second agitator 300 is arranged with respect to the suction port 121 may be called the rear of the cleaner nozzle 1. In addition, on the basis of a state in which the cleaner nozzle 1 is placed on the floor surface (the ground) (a state in which the first agitator 200 and the second agitator 300 are in contact with the floor surface), a side moving away from the floor surface may be called an upper side, and a side moving closer to the floor surface may be called a lower side.

The nozzle housing 100 may have the first agitator 200 and the second agitator 300 mounted therein and constitute the exterior of the cleaner nozzle 1. In addition, the connection tube 400 may be coupled to the nozzle housing 100.

The nozzle housing 100 may include an upper surface 110 of the nozzle housing 100 to which the connection tube 400 is coupled. A connection tube coupling part 130 may be formed on the upper surface 110 by protruding therefrom. In addition, the connection tube coupling part 130 may be hingedly coupled to the connection tube 400.

On the basis of a state in which the first agitator 200 and the second agitator 300 are in contact with the floor surface (the ground), the upper surface 110 of the nozzle housing 100 may be formed to be inclined at a predetermined angle relative to the ground.

Specifically, on the basis of the state in which the first agitator 200 and the second agitator 300 are in contact with the floor surface (the ground), the upper surface 110 may be formed such that a first side of the upper surface 110 at which the first agitator 200 is arranged is located farther from the ground than a second side thereof at which the second agitator 300 is arranged.

Accordingly, according to this embodiment, there is an advantage in that the height of the rear of the nozzle housing 100 in total height thereof can be reduced. When the rear height is decreased, the connection tube 400, which is hingedly coupled to the nozzle housing 100, may be rotated at a greater angle toward the rear of the cleaner nozzle 1. In this case, height from the ground to the top of the connection tube 400 may be decreased. As described above, as the height from the ground to the top of the connection tube 400 decreases, the cleaner nozzle may be inserted into narrow spaces under furniture or chairs, thereby further increasing an area that can be cleaned.

The nozzle housing 100 may include the lower surface 120 on which the first agitator 200 and the second agitator 300 are arranged.

In this case, the lower surface 120 may be arranged to face the floor surface while the nozzle housing 100 is placed on the floor surface (the ground).

The suction port 121 may be formed in the nozzle housing 100. Specifically, the suction port 121 may be formed on the lower surface 120 of the nozzle housing 100. The suction port 121 refers to a space through which air containing dust can be introduced. With this configuration, when the suction motor (not shown) of the cleaner body 2 is operated, dust and air existing around the floor surface may be sucked into a flow path of the cleaner nozzle 1 through the suction port 121.

Inside the nozzle housing 100, a printed circuit board (not shown) may be installed to control an agitator motor (not shown).

In addition, the nozzle housing 100 may have a flow path which communicates with the suction port 121 and guides air introduced from the suction port 121 to the cleaner body 2.

The flow path may be arranged inside the nozzle housing 100, wherein a lower end part of the flow path may communicate with the suction port 121, and an upper end part of the flow path may be connected to the connection tube 400.

In this case, the flow path connecting the suction port 121 and the connection tube 400 to each other may be formed approximately along an up-down direction. This configuration has the advantage of minimizing a path through which air containing dust is sucked in and minimizing flow loss.

A caster reception hole 122 may be formed in the nozzle housing 100. Specifically, the caster reception hole 122 may be formed in the lower surface 120 of the nozzle housing 100. The caster reception hole 122 may refer to a space that allows at least a portion of the caster 124 to be exposed to the outside.

The caster reception hole 122 may be arranged between the first agitator 200 and the second agitator 300. Additionally, the caster reception hole 122 may include a pair of caster reception holes arranged at a predetermined distance from the left and right ends of the suction port 121, respectively. That is, the pair of caster reception holes 122 may be arranged on both left and right sides of the lower surface 120, respectively, centered on the suction port 121.

With this configuration, the caster reception hole 122 may allow the caster 124 to be arranged between the first agitator 200 and the second agitator 300. Accordingly, when external force is applied during a cleaning operation, the caster 124 may support the nozzle housing 100, and prevent excessive external force from being applied to the first agitator 200 and/or the second agitator 300, thereby preventing a load applied to the agitator motor (not shown) from increasing.

In addition, with a distance kept between the suction port 121 and the caster reception hole 122, dust flowing toward the suction port 121 may be prevented from flowing into the caster reception hole 122.

The caster reception hole 122 may be formed so that the caster 124 is rotatable relative thereto. For example, the caster reception hole 122 may be formed in a circular or oval hole shape. Therefore, although a caster reception part 123 and the caster 124 rotate around a rotation axis perpendicular to the ground, the caster reception part 123 and the caster 124 may be prevented from interfering with the lower surface 120.

The caster reception part 123 is rotatably coupled to the caster 124 and may be provided to be rotatable relative to the lower surface 120 of the nozzle housing 100.

The caster reception part 123 may be arranged in the internal space of the nozzle housing 100. That is, the caster reception part 123 may be arranged in space formed between the lower surface 120 and the upper surface 110 of the nozzle housing 100. In this case, a shaft 123a provided in the caster reception part 123 may be rotatably coupled to the nozzle housing 100. The shaft 123a of the caster reception part 123 may be formed along a direction perpendicular to the lower surface 120. Therefore, when the cleaner nozzle 1 is placed on the floor surface, the caster reception part 123 may rotate around a rotation axis that is perpendicular to the floor surface.

Additionally, the caster reception part 123 may be formed in a shape that can accommodate at least a portion of the caster 124. For example, the caster reception part 123 may have a cover surface 123b formed along a direction perpendicular to the shaft 123a (a direction parallel to the lower surface 120). Additionally, the caster reception part 123 may have a side wall surface 123c formed to extend perpendicularly downward from the cover surface 123b. Additionally, a caster shaft 123d, which is the rotation axis of the caster 124, may be coupled to the side wall surface 123c. In this case, the caster shaft 123d may be formed along a direction parallel to the extension direction of the lower surface 120 (a direction parallel to the floor surface).

Accordingly, according to the present invention, the caster reception part 123 may rotate about a rotation axis perpendicular to the floor surface. This configuration has the effect of eliminating restrictions on a direction in which the caster 124 can roll.

Therefore, according to the present invention, when a user moves the cleaner nozzle 1 in a left/right direction or a diagonal direction as well as in a forward/backward direction, the caster reception part 123 may rotate to change a direction in which the caster 124 can roll.

As a result, the present invention has the effect of improving a user's operability because the caster 124 can change a direction and roll along the floor surface even when the user pushes and pulls the cleaner nozzle 1 in various directions.

The caster 124 may be rotatably coupled to the caster reception part 123 and is arranged on the lower surface 120 so as to roll along the floor surface (the ground).

The caster 124 may include a plurality of casters provided on the lower surface 120. For example, the caster 124 may include a pair of casters arranged to be spaced apart from each other in the left-to-right direction on the lower surface 120. In this case, the suction port 121 may be arranged between the pair of casters.

Each of the casters 124 may be rotatably coupled to the caster reception part 123 by the caster shaft 123d.

At least a portion of the caster 124 may be coupled to the caster reception part 123 and be arranged within the nozzle housing 100. In addition, at least a portion of the caster 124 may pass through the caster reception hole 122 and be exposed to the outside of the nozzle housing 100.

With this configuration, when the cleaner nozzle 1 is placed on the floor surface, the caster 124 may be in contact with the floor surface. Accordingly, when the cleaner nozzle 1 is moved by a user's operation, friction between the nozzle housing 100 and the floor surface may be reduced and the mobility of the cleaner nozzle 1 may be improved.

Meanwhile, a virtual caster passage surface C that passes through the center of rotation of each of the pair of casters and extends along a direction perpendicular to the floor surface may be formed.

Meanwhile, in this embodiment, a foreign matter blocking member 125 may be arranged on the periphery of the caster reception hole 122.

The foreign matter blocking part 125 may be formed into a shape or of a material that increases friction. For example, the foreign matter blocking part 125 may be formed in a form in which a plurality of fine protrusions is formed by protruding therefrom. For another example, the foreign matter blocking part 125 may be formed of a rubber material. Accordingly, the foreign matter blocking part 125 may block foreign substances from passing through the surface of the foreign matter blocking part 125.

The foreign matter blocking part 125, which is arranged on the lower surface 120, may be arranged to surround at least a portion of the caster reception hole 122. For example, the foreign matter blocking part 125 may be formed in a horseshoe shape protruding toward the suction port 121. With this configuration, it is possible to prevent dust moved by the rotations of the first agitator 200 and the second agitator 300 from flowing into the caster reception hole 122.

Meanwhile, the connection tube coupling part 130 may be formed by protruding and extending from the upper surface 110. Specifically, on the basis of a state in which the first agitator 200 and the second agitator 300 are in contact with the floor surface (the ground) (a state in which the cleaner nozzle 1 is placed on the floor surface), the connection tube coupling part 130 may be formed to protrude and extend from the upper surface 110 in a direction perpendicular to the floor surface (a direction perpendicular to the lower surface 120).

In particular, the connection tube coupling part 130 may be formed to protrude and extend from an inclined surface 113 in a direction perpendicular to the floor surface (a direction perpendicular to the lower surface 120).

The connection tube coupling part 130 may have a pair of connection tube coupling parts with a symmetrical shape formed on the upper surface 110. In addition, the connection tube 400 may be rotatably coupled between the pair of connection tube coupling parts 130. Specifically, the pair of connection tube coupling parts 130 may be hingedly coupled to the connection tube 400. That is, each of the pair of connection tube coupling parts 130 may be provided with a hinge shaft that is coupled to the connection tube 400, and the connection tube 400 may rotate (pivot) about the hinge shaft.

In this case, the upper end part of the connection tube coupling part 130 may be arranged farther from the ground than the upper surface of the nozzle housing 100. That is, when the cleaner nozzle 1 is placed on the floor surface, the connection tube coupling part 130 may be arranged farther from the ground than the upper end part of the upper surface.

With this configuration, the connection tube 400 may secure a sufficient angle to rotate. In addition, the upper surface 110 is formed to be inclined downward toward the second agitator 300, and accordingly, when the connection tube 400 rotates toward the second agitator 300, the connection tube 400 may be arranged close to the floor surface (approximately parallel to the floor surface). Accordingly, the overall height of the cleaner nozzle 1 may be decreased, and this has the advantage of allowing cleaning of accessible low-height spaces such as a bed and a sofa.

Meanwhile, a virtual connection tube connecting surface P that passes through the hinge shaft, which hingedly couples the connection tube 400 and the nozzle housing 100, in a direction perpendicular to the ground may be formed.

A button operating member 140 may be formed on the rear side of the nozzle housing 100 and may be in contact with one side of the connection tube 400. Specifically, the button operating member 140 is formed to protrude from the rear end part of the upper surface 110 and is in contact with a locking part 431 provided in the connection tube 400, thereby operating the locking part 431.

The connection tube 400 is provided with a plurality of steering parts so that the connection tube 400 may rotate in multiple directions, and with this configuration, the button operating member 140 may limit the rotation of the connection tube 400 in a particular direction.

The first agitator 200 is installed in the nozzle housing 100 and serves to separate foreign substances from an object to be cleaned. The first agitator 200 may be arranged on the front side of the cleaner nozzle 1. The first agitator 200 may be rotatably coupled to the nozzle housing 100.

The first agitator 200 is formed in a cylindrical shape and may be arranged along the left-to-right direction of the nozzle housing 100. That is, the longitudinal direction (axial direction) of the first agitator 200 may be a direction intersecting the front-to-rear direction of the cleaner nozzle 1.

The outer circumferential surface of the first agitator 200 may be provided with a brush or a member capable of increasing friction.

The first agitator 200 may be provided with at least one gear to receive rotational power from the agitator motor (not shown).

The first agitator 200 may guide external dust and air to the suction port 121 by rotation thereof. The first agitator 200 may be rotated in a direction in which an outer circumferential surface thereof facing the floor surface moves toward the suction port 121. In other words, when looking at the cleaner nozzle 1 from the left side of the cleaner nozzle 1, the first agitator 200 may be rotated counterclockwise. With this configuration, external dust and air may be guided toward the suction port 121 while rubbing against the first agitator 200.

Meanwhile, the first agitator 200 may be replaceably coupled to the nozzle housing 100. Accordingly, depending on a cleaning environment, the first agitator 200 may be replaced for cleaning.

The second agitator 300 is installed in the nozzle housing 100 and serves to separate foreign substances from an object to be cleaned. The second agitator 300 may be arranged rearward from the cleaner nozzle 1. The second agitator 300 may be rotatably coupled to the nozzle housing 100.

The second agitator 300 is formed in a cylindrical shape and may be arranged along the left-to-right direction of the nozzle housing 100. That is, the longitudinal direction (axial direction) of the second agitator 300 may be a direction intersecting the front-to-rear direction of the cleaner nozzle 1.

The outer circumferential surface of the second agitator 300 may be provided with a brush or a member capable of increasing friction.

The second agitator 300 may be provided with at least one gear to receive rotational power from the agitator motor (not shown). In this case, the first agitator 200 and the second agitator 300 may receive power from one agitator motor. For example, the first agitator 200 and the second agitator 300 may be connected by a belt and receive power from the agitator motor. For another example, the first agitator 200 and the second agitator 300 may be connected to each other through at least one gear and receive power from the agitator motor.

The second agitator 300 may guide external dust and air to the suction port 121 by rotation thereof. In this case, the second agitator 300 may rotate in an opposite direction to the first agitator 200.

That is, the second agitator 300 may be rotated in a direction in which an outer circumferential surface thereof facing the floor surface moves toward the suction port 121. In other words, when looking at the cleaner nozzle 1 from the left side of the cleaner nozzle 1, the second agitator 300 may be rotated clockwise. With this configuration, external dust and air may be guided toward the suction port 121 while rubbing against the first agitator 200.

With this configuration, dust around the suction port 121 may be collected toward the suction port 121 by the first agitator 200 and the second agitator 300, and may be sucked by the suction force of the cleaner body 2 and removed from the floor surface.

Meanwhile, the second agitator 300 may be replaceably coupled to the nozzle housing 100. Accordingly, depending on the cleaning environment, the second agitator 300 may be replaced for cleaning.

Furthermore, in the cleaner nozzle 1 of the present invention, both the first agitator 200 and the second agitator 300 may be replaced, there is the effect of maximizing cleaning efficiency by creating the combination of various agitators depending on a condition of the floor surface or a cleaning environment.

Meanwhile, in the cleaner nozzle 1 according to the embodiment of the present invention, the diameter of the first agitator 200 and the diameter of the second agitator 300 are different. Specifically, the diameter of the first agitator 200 is larger than the diameter of the second agitator 300.

When the diameter of the first agitator 200 is larger than the diameter of the second agitator 300, the torque of the second agitator 300, which has a smaller diameter, is smaller than the torque of the first agitator 200. That is, rotational power required for the rotation of the second agitator 300 is less than rotational power required for the rotation of the first agitator 200.

Accordingly, compared to rotating two agitators having the same diameters, when the diameter of the second agitator 300 is smaller than the diameter of the first agitator 200 as in the present invention, motor power required to rotate the two agitators is lower.

Thus, according to the present invention, one agitator motor (not shown) may rotate the two agitators while reducing power required for the motor. Accordingly, there is the effect of reducing the amount of power consumed by the cleaner nozzle and lowering a load applied to the motor.

In addition, the diameter of the first agitator 200 is larger than the diameter of the second agitator 300, so that the upper surface 110 of the nozzle housing 100 covering the upper portions of the first agitator 200 and the second agitator 300 may be inclined. That is, when the first agitator 200 and the second agitator 300 are placed on the floor surface (the ground), the height of the top of the first agitator 200 is higher than the height of the top of the second agitator 300, and a height difference may occur in portions of the nozzle housing 100 covering the first agitator 200 and the second agitator 300, and an inclination may be formed to connect the portions. That is, the upper surface 110 of the nozzle housing 100 of the present invention may include a first agitator cover part 111 covering the vertical upper side of the first agitator 200, a second agitator cover part 112 covering the vertical upper side of the second agitator 300, and the inclined surface 113 connecting the first agitator cover part 111 and the second agitator cover part 112.

Through this configuration, when the connection tube 400 is rotated toward the second agitator 300, a position at which the connection tube 400 comes into contact with the nozzle housing 100 may be lowered. Accordingly, according to the present invention, the connection tube 400 may be laid closer to the ground, thereby lowering the overall height of the cleaner nozzle 1.

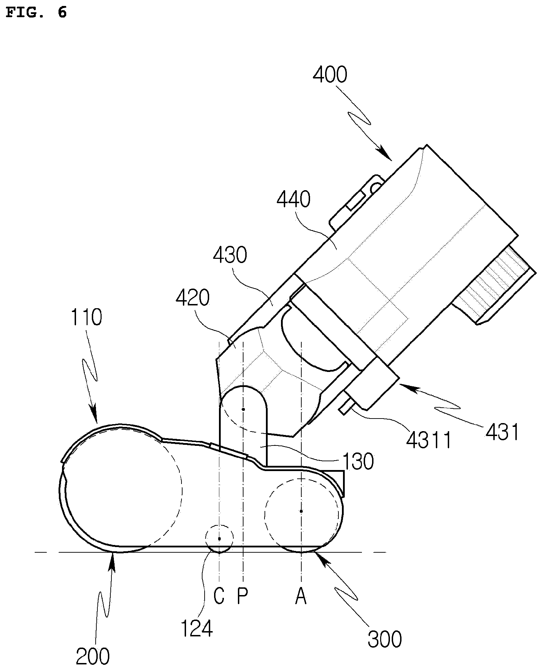

Meanwhile, FIG. 6 is a drawing illustrating the positional relationship of a virtual caster passage surface, a virtual agitator passage surface, and a virtual connection tube connecting surface in a cleaner nozzle according to an embodiment of the present invention.

Referring to FIG. 6, in this embodiment, a virtual agitator passage surface A that passes through the rotation axis (rotational center) of the second agitator 300 in a direction perpendicular to the floor surface (the ground) may be formed.

Hereinafter, an arrangement relationship between the agitator passage surface A, the connection tube connecting surface P, and the caster passage surface C, and its effect will be described.

In the cleaner nozzle 1 according to an embodiment of the present invention, the connection tube connecting surface P is arranged between the caster passage surface C and the agitator passage surface A.

Here, the connection tube connecting surface P may be an imaginary surface extending by passing through a point at which the connection tube coupling part 130 and the connection tube 400 are coupled to each other along a direction perpendicular to the ground. In other words, on the basis of a state in which the cleaner nozzle 1 is placed on the floor surface, the connection tube connecting surface P may be an imaginary surface extending along a direction perpendicular to the ground through a first steering shaft X.

When a user manipulates the cleaner body 2, the extension tube 3 and the connection tube 400 may press or lift the nozzle housing 100 as the user pushes or pulls the cleaner body 2. In this case, an operating force applied by the user is transmitted to the nozzle housing 100 through the extension tube 3 and the connection tube 400, and the nozzle housing 100 is moved on the floor surface (the ground) by the operating force applied by the user.

In this case, the operating force of the user may be applied downward in a direction perpendicular to the ground along the connection tube coupling part 130 through a point at which the connection tube coupling part 130 and the connection tube 400 are coupled to each other and may be transmitted to the nozzle housing 100. That is, the connection tube connecting surface P may refer to a location and a direction to which the operating force of the user is applied.

Meanwhile, the caster passage surface C may be an imaginary surface formed along a direction perpendicular to the ground by passing through the centers of rotations of the pair of casters 124. The caster passage surface C may be an imaginary surface formed along a direction perpendicular to the ground through points at which the pair of casters 124 contact the floor surface (the ground).

Accordingly, the caster passage surface C may refer to a position at which and a direction in which the cleaner nozzle 1 presses the floor surface due to the load of the cleaner nozzle 1 and the operating force of a user.

Meanwhile, the agitator passage surface A may be an imaginary surface extending along a direction perpendicular to the ground by passing through the rotation axis of the second agitator. The agitator passage surface A may be an imaginary surface formed along a direction perpendicular to the ground through a line where the second agitator 300 contacts the floor surface (the ground).

Accordingly, the agitator passage surface A may refer to a position at which and a direction in which the cleaner nozzle 1 presses the floor surface due to the load of the cleaner nozzle 1 and the operating force of a user.

Accordingly, since the connection tube connecting surface P is arranged between the caster passage surface C and the agitator passage surface A, a force (operating force) applied by a user may be applied to the caster 124 and the second agitator 300.

With this configuration, when the cleaner nozzle 1 is pressed downward by the operating force of a user, the caster 124 and the second agitator 300 are pressed toward the ground, and relative increase in friction between the first agitator 200 and the ground may be reduced. Accordingly, there is an effect of preventing a large load from being applied to the agitator motor due to the friction between the first agitator 200 and the ground.

Meanwhile, when the caster 124 and the second agitator 300 are pressed toward the ground, the second agitator 300 may experience less frictional resistance between the second agitator 300 and the ground compared to the first agitator 200.

Specifically, the first agitator 200 and the second agitator 300 receive the same torque from one agitator motor. In this case, when the diameter of the first agitator 200 is larger than the diameter of the second agitator 300, torque due to friction between the first agitator 200 and the ground may be greater than torque due to friction between the second agitator 300 and the ground.

For example, when a friction force F1 between the first agitator 200 and the ground and a friction force F2 between the second agitator 300 and the ground are the same (F1=F2), a distance r1 between the center of rotation of the first agitator 200 and the ground is greater than a distance between the center of rotation r2 of the second agitator 300 and the ground (r1>r2), so the torque (r1XF1) due to the friction between the first agitator 200 and the ground is greater than the torque (r2XF2) due to the friction between the second agitator 300 and the ground.

Therefore, even under a condition in which the rotation of the first agitator 200 is stopped when the first agitator 200 rubs against the ground, the second agitator 300 may rotate.

Therefore, according to the present invention, the diameter of the second agitator 300 may be smaller than the diameter of the first agitator 200 so that the operating force of a user presses the second agitator 300, thereby allowing the second agitator 300 to be rotated even when a floor surface with high friction such as a mat or carpet is cleaned. Accordingly, the cleaner nozzle 1 of the present invention may be easily moved forward or backward even on the floor surface such as a mat or carpet, and has the effect of preventing the agitator motor from being overloaded.

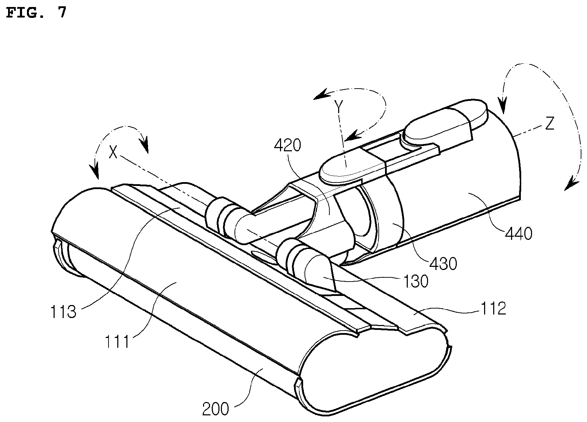

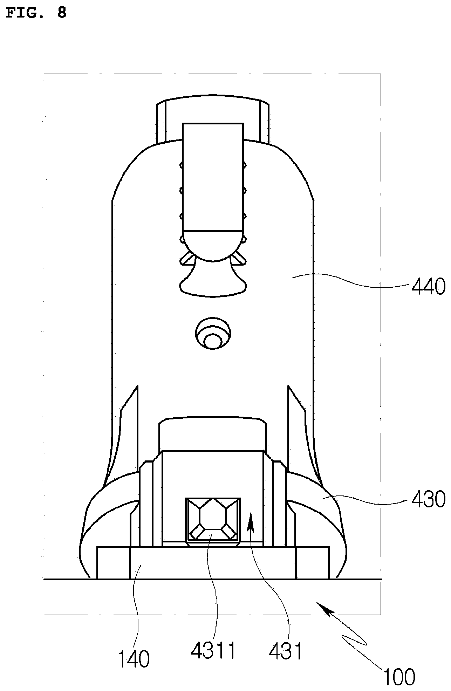

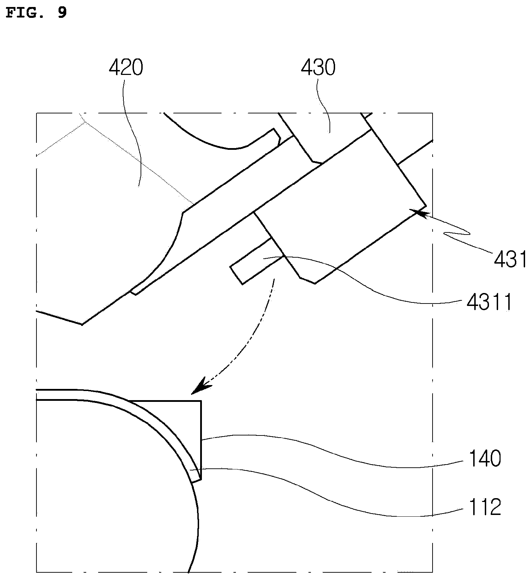

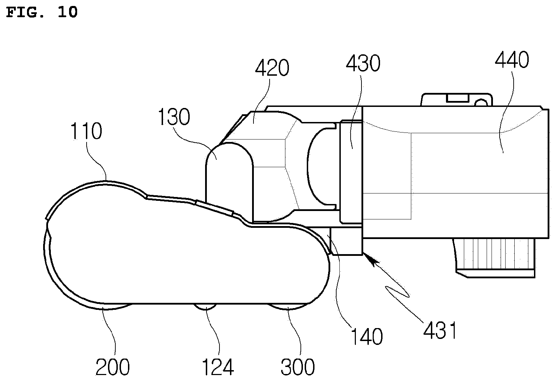

FIG. 7 is a drawing illustrating the steering direction of a connection tube in a cleaner nozzle according to an embodiment of the present invention, FIG. 8 is a bottom view illustrating the connection tube in a cleaner nozzle according to an embodiment of the present invention, FIG. 9 is a partially enlarged view illustrating a locking part and a connection tube fastening part in a cleaner nozzle according to an embodiment of the present invention, and FIG. 10 is a side view illustrating a state in which a locking part and a connection tube fastening part are combined in a cleaner nozzle according to an embodiment of the present invention.

Referring to FIGS. 7 to 10, the connection tube 400 according to an embodiment of the present invention will be described below.

The connection tube 400 has the flow path communicating with the suction port 121, and connects the nozzle housing 100 with the extension tube 3 or the nozzle housing 100 with the cleaner body 2.

The connection tube 400 includes a pipe 410, a first steering part 420, a second steering part 430, and a third steering part 440.

The connection tube 400 is capable of rolling, pitching, and yawing by having the first steering part 420, the second steering part 430, and the third steering part 440. Specifically, the connection tube 400 is capable of pitching about a rotation axis arranged at the front end of the first steering part 420, is capable of yawing about a rotation axis arranged at the front end of the second steering part 430, and is capable of rolling about a rotation axis arranged in the longitudinal direction of the third steering part 440.

The pipe 410 may have the flow path formed therein so that the flow path communicates with the suction port 121. The pipe 410 may be coupled to the nozzle housing 100 to communicate with the flow path inside the nozzle housing 100.

The pipe 410 may be formed of a deformable material. Specifically, the pipe 410 may be formed of a bendable material. Accordingly, the pipe 410 may be bent and deformed according to the rotation of each of the first steering part 420, the second steering part 430, and the third steering part 440 of the connection tube 400.

The first steering part 420 accommodates at least a portion of the pipe 410 therein and is hingedly coupled to the nozzle housing 100.

The first steering part 420 is formed to be hollow so that the pipe 410 passes through the inside of the first steering part 420, and a first side of the first steering part 420 is hingedly coupled to the connection tube coupling part 130, and a second side of the first steering part 420 is hingedly coupled to the second steering part 430.

In this case, an axis about which the first steering part 420 rotates with respect to the connection tube coupling part 130 may be arranged along a direction parallel to the floor surface (the ground).

With this configuration, when a user places the cleaner nozzle 1 on the floor surface and lifts or lowers the cleaner body 2, the cleaner body 2 and the connection tube 400 may be rotated about the hinge shaft.

In addition, the direction of the hinge shaft (hereinafter, referred to as "the first steering shaft X") to which the first steering part 420 and the connection tube coupling part 130 are coupled and the direction of a hinge shaft (hereinafter, referred to as "a second steering shaft Y") to which the first steering part 420 and the second steering part 430 are coupled may be perpendicular to each other.

With this configuration, when a user places the cleaner nozzle 1 on the floor surface and moves the cleaner body 2 in left and right directions, the cleaner body 2 and the connection tube 400 may be rotated about the second steering shaft (pitching).

The direction in which the first steering part 420 rotates (pivots) with respect to the nozzle housing 100 may intersect with the direction in which the second steering part 430 rotates with respect to the first steering part 420. Accordingly, in the cleaner nozzle 1 of the present invention, the connection tube 400 has the advantage of being able to bend at various angles by combining the rotational direction of the first steering part 420 and the rotational direction of the second steering part 430.

The second steering part 430 is hingedly coupled to the first steering part 420 and is coupled to the third steering part 440 to be rotatable relative thereto (yawing).

Specifically, the second steering part 430 is formed hollow so that the pipe 410 passes through the interior thereof, wherein a first side of the second steering part 430 is hingedly coupled to the first steering part 420, and a second side of the second steering part 430 is coupled to the third steering part 440 so that the third steering part 440 is able to rotate relative thereto.

The locking part 431 may be arranged on the second steering part 430. The locking part 431 is fixedly coupled to the second steering part 430 and may be inserted into and coupled to the third steering part 440 according to a linear movement thereof. For example, the locking part 431 may be provided with a plate-shaped stopper 4312 that is inserted into the third steering part 440 by a linear movement thereof.

The third steering part 440 is rotatably coupled to the second steering part 430. For example, the third steering part 440 is formed in a shape similar to the shape of a pipe, and the inner circumferential surface of a fist side of the third steering part 440 may receive and be coupled to the end part of the second side of the second steering part 430. In this case, a step is formed on the end part of the second side of the second steering part 430 to prevent the separation of the second steering part 430 and the third steering part 440.

The third steering part 440 may rotate about the end part of the second side of the second steering part 430 as a rotation axis. In this case, the rotation shaft of the third steering part 440 (hereinafter, referred to as "a third steering shaft Z") may be perpendicular to the direction of the first steering shaft X and the direction of the second steering shaft Y.

With this configuration, when a user places the cleaner nozzle 1 on the floor surface and turns the cleaner body 2, the third steering part 440 may be rotated (rolling). This allows a user to lie face down and clean the floor surface with the cleaner body 2 lying down, when cleaning a narrow space in which the cleaner nozzle can enter, such as a position under a bed or other furniture.

As a result, the connection tube 400 of the present invention has the advantage of being able to rotate about the three rotation shafts and be bent at various angles, making it easy for a user to operate.

A second side of the third steering part 440 is detachably coupled to the extension tube 3 or the cleaner body 2.

The third steering part 440 has the flow path formed therein through which air can flow. For example, the third steering part 440 may accommodate the pipe 410 inside. For another example, the third steering part 440 may have a space formed inside which communicates with the pipe 410.

The third steering part 440 may include a stopper receiving part 440a into which the stopper 4312 can be inserted. For example, the stopper receiving part 440a may be formed in the shape of a quadrangular recess to accommodate the plate-shaped stopper 4312.

When the stopper 4312 is coupled to the stopper receiving part 440a, the relative rotation of the third steering part 440 with respect to the second steering part 430 is limited. Accordingly, the rolling of the extension tube is limited.

With this configuration, in a position where the rotation of the third steering part 440 is unnecessary, even if a user turns the cleaner body 2, the third steering part 440 does not rotate, and the entire cleaner nozzle 1 may rotate. That is, the cleaner body 2 cannot roll, but can only yaw.

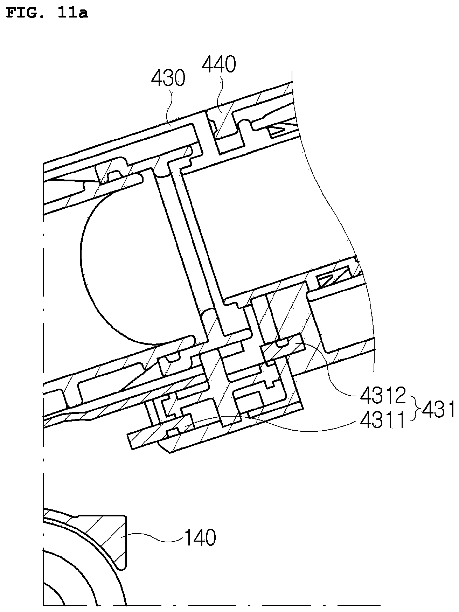

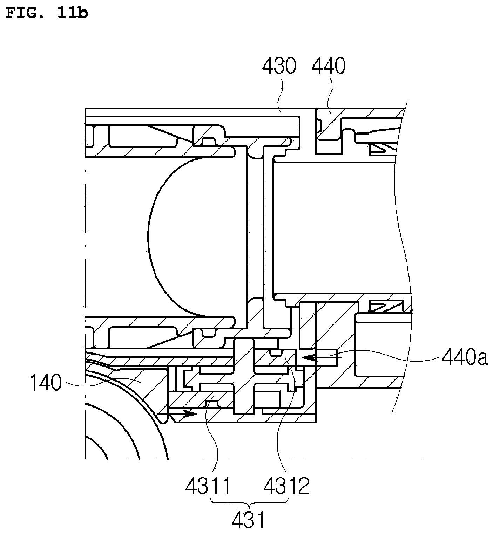

FIGS. 11a and 11b are partial cross-sectional views illustrating a locking part and a connection tube fastening part in a cleaner nozzle according to an embodiment of the present invention.

A selective fixing structure according to the present invention will be described with reference to FIGS. 9, 10, 11a, and 11b.

The cleaner nozzle includes the locking part 431. The locking part 431 selectively fixes a fixed steering part 440 to a rotating steering part 430.

The locking part 431 is a component that selectively locks or releases a portion of a plurality of rotations of the connection tube. Specifically, the connection tube is capable of rolling, pitching, and yawing, and the locking part 431 restricts the rolling when an angle between the connection tube and the ground is a predetermined angle or more, and allows the rolling when the angle between the connection tube and the ground is a predetermined angle or less.

The locking part 431 includes a button 4311 and the stopper 4312.

The button 4311 is arranged in the rotating steering part 430 and is operated by the button operating member 140 when an angle between the ground and the connection tube is a predetermined angle or less.

For example, the predetermined angle may be 10 to 15 degrees. When the angle between the ground and the connection tube is a high angle of 15 degrees or more, the connection tube 400 is more maneuverable when yawing rather than rolling. Conversely, when the angle between the ground and the connection tube is a low angle of 10 degrees or less, the connection tube 400 is more maneuverable when rolling rather than yawing. In addition, assuming that yawing is always possible, the cleaner nozzle wobbles by yawing randomly in the case of a low angle, thereby making an operation thereof difficult. Accordingly, the locking part 431 limits the rolling of the connection tube 400 at a high angle, allowing the connection tube 400 to only yaw, and allows the rolling of the connection tube 400 at a low angle, improving maneuverability.

The button 4311 is arranged in the rotating steering part 430. At least a portion of the button 4311 protrudes forward from the rotating steering part 430.

Although not shown, an elastic member may be arranged on one side of the button 4311. The elastic member returns the button 4311 to an original position thereof when an external force is removed after the button 4311 has been operated. For example, when an angle between the ground and the connection tube is a predetermined angle or more, the external force is removed, and the button 4311 is protruded again forward from the rotating steering part 430 by the elastic member.

The stopper 4312 is operated by the operation of the button 4311, and at least a portion of the stopper 4312 is inserted into the stopper receiving part 440a formed in the fixed steering part 440 when the button 4311 is not operated, and is pulled out from the stopper receiving part 440a when the button 4311 is operated.

When the stopper 4312 is inserted into the stopper receiving part 440a, the fixed steering part 440 is held by the stopper 4312 and may not rotate relative to the rotating steering part 430. When the stopper 4312 is pulled out from the stopper receiving part 440a, the fixed steering part 440 may rotate relative to the rotating steering part 430.

The stopper 4312 is arranged in the rotating steering part 430. At least a portion of the stopper 4312 may protrude rearward from the rotating steering part 430.

Although not shown, the elastic member may be placed on one side of the stopper 4312. The elastic member returns the stopper 4312 to an original position thereof when an external force is removed after the button 4311 has been operated. For example, when an angle between the ground and the connection tube is a predetermined angle or more, the external force is removed, and the stopper 4312 is protruded back rearward from the rotating steering part 430 by the elastic member and is re-inserted into the stopper receiving part 440a.

The cleaner nozzle includes the button operating member 140. The button operating member 140 is formed on one side of the nozzle housing.

The button operating member 140 is a component that operates the button 4311. According to a first embodiment and a fifth embodiment, the button operating member 140 operates the button 4311 by pulling the button 4311 forward. According to second to fourth embodiments, the button operating member 140 operates the button 4311 by pushing the button 4311 rearward.

When the button 4311 is operated, the button operating member 140 is in close contact with the button 4311. When the button 4311 is not operated, the button operating member 140 is arranged to be spaced apart from the button 4311 by a predetermined distance.

The fixed steering part 440 may be the third steering part 440. The third steering part 440 is selectively fixed, and the rolling of the connection tube 400 may performed or limited depending on an angle of the connection tube 400 with respect to the ground.

The rotating steering part 430 may be the second steering part 430. Specifically, the first steering part 420 capable of pitching is coupled to the nozzle housing, the second steering part 430 capable of yawing is coupled to the first steering part 420, and the third steering part 440 capable of rolling is coupled to the second steering part 430. With this arrangement, when the rolling is limited, the pitching and yawing are possible by the first steering part and the second steering part 430, respectively, and when the rolling is possible, the pitching and rolling are possible by the first steering part and the third steering part, respectively.

The button 4311 may be inserted into the rotating steering part 430 while being pressed by the button operating member 140 during operation. The stopper 4312 may be inserted into the rotating steering part 430 during operation and pulled out from the recess formed in the fixed steering part 440.

A direction in which the button 4311 is inserted and a direction in which the stopper 4312 is inserted may be opposite to each other.

Referring to FIGS. 11a and 11b, the button 4311 moves rearward and is inserted into the rotating steering part 430, and the stopper 4312 moves forward and is inserted into the rotating steering part 430.

With this arrangement, the locking part 431 may be operated at a low angle with the size of the locking part 431 minimized.

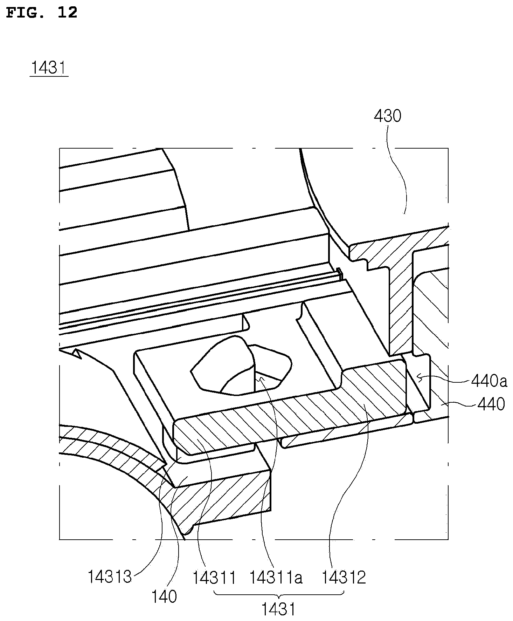

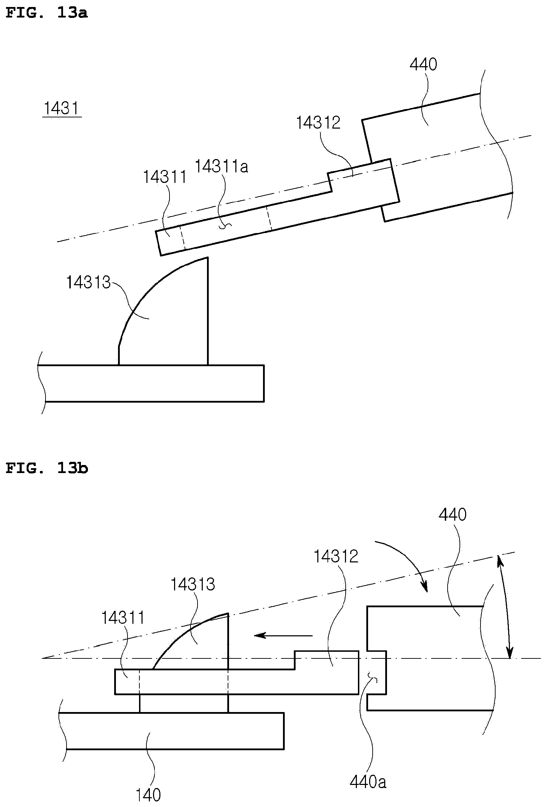

FIG. 12 is a partially enlarged view showing a locking part and a connection tube fastening part in the cleaner nozzle according to the first embodiment of the present invention, and FIGS. 13a and 13b are schematic diagrams illustrating the locking part and the connection tube fastening part in the cleaner nozzle according to the first embodiment of the present invention.

Hereinafter, a locking part 1431 according to the first embodiment will be described with reference to FIGS. 12, 13a, and 13b.

A button 14311 is operated by being pressed in a direction intersecting a moving direction thereof.

The locking part 1431 has a hole 14311a formed in the button 14311, and includes a release hook 14313.

The release hook 14313 is arranged on the button operating member 140 and moves the button 14311 when the release hook 14313 is inserted into the hole 14311a of the button 14311.

According to the first embodiment, the button 14311 and a stopper 14312 may be formed integrally. Specifically, the stopper 14312 may be arranged at the rear of the button 14311 and be formed integrally with the button 14311.

Referring to FIG. 12, the hole 14311a of the button 14311 is formed by vertically penetrating the button 14311. Alternatively, unlike that shown in FIG. 12, the button 14311 may have a recess that is recessed upward from a lower surface thereof and into which the release hook 14313 is inserted.

The release hook 14313 may be formed to protrude upward from the upper surface of the button operating member 140. Referring to FIG. 12, the release hook 14313 may be formed with a rear surface thereof formed as a vertical surface and a front surface thereof formed as a downward inclined surface toward the front side. Since the release hook 14313 is formed in this shape, the front end of the hole 14311a of the button 14311 may move along the inclined surface of the release hook 14313 and may be pulled out forward from the rotating steering part 430.

When the connection tube 400 is positioned from a low angle to a high angle, the button 14311 and the stopper 14312 are restored rearward by the elastic member, and the stopper 14312 is inserted into the stopper receiving part 440a.

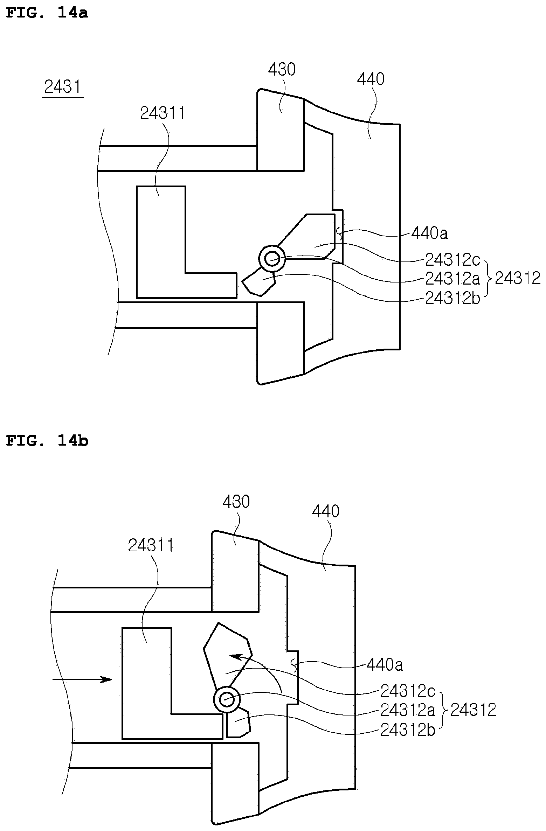

FIGS. 14a and 14b are bottom views of a locking part in a cleaner nozzle according to a second embodiment of the present invention.

Hereinafter, a locking part 2431 according to the second embodiment will be described with reference to FIGS. 14a and 14b.

A stopper 24312 may be composed of a hinge 24312a, a button close-contact part 24312b, and an insertion part 24312c.

The hinge 24312a of the stopper is connected to the rotating steering part 430 and is a center shaft of rotation.

The button close-contact part 24312b extends radially outward from the hinge 24312a of the stopper, is in close contact with a button 24311, and rotates about the hinge 24312a of the stopper when the button 24311 is operated.

For example, referring to FIGS. 14a and 14b, the button close-contact part 24312b may be formed to extend downward from the hinge 24312a of the stopper. When the button 24311 is operated, the button 24311 pushes the button close-contact part 24312b rearward, and the button close-contact part 24312b rotates counterclockwise with respect to FIGS. 14a and 14b.

The insertion part 24312c of the stopper extends from the hinge 24312a of the stopper in a direction different from a direction in which the button close-contact part 24312b extends, and is inserted into a recess formed in the fixed steering part 440 when the button 24311 is not operated.

For example, referring to FIGS. 14a and 14b, the insertion part 24312c of the stopper may be formed to extend upward from the hinge 24312a of the stopper. When the button 24311 is operated, the button close-contact part 24312b rotates counterclockwise, and the insertion part 24312c of the stopper also rotates counterclockwise and is pulled out from the stopper receiving part 440a.

When the connection tube 400 is positioned from a low angle to a high angle, the stopper 24312 is rotated clockwise with respect to FIGS. 14a and 14b by the elastic member and inserted into the stopper receiving part 440a.

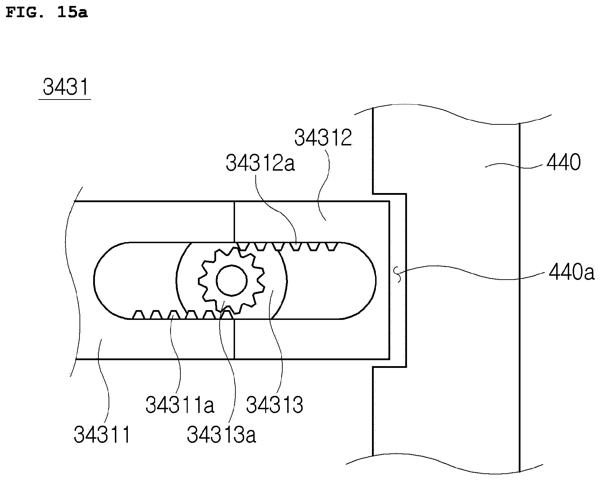

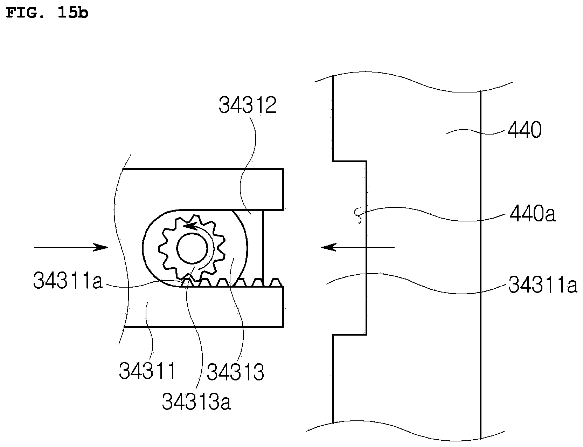

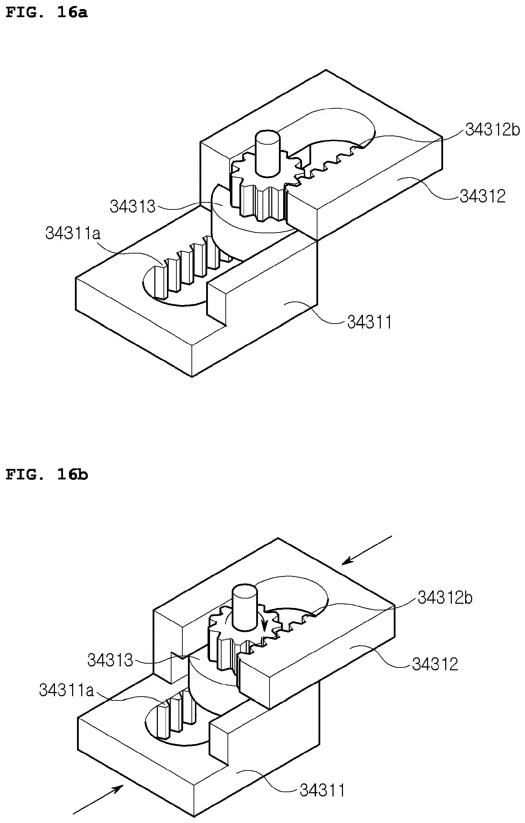

FIGS. 15a and 15b illustrate bottom views of a locking part of a cleaner nozzle according to a third embodiment of the present invention, and FIGS. 16a and 16b illustrate schematic views for explaining the locking part of the cleaner nozzle according to the third embodiment of the present invention.

Hereinafter, a locking part 3431 according to the third embodiment will be described with reference to FIGS. 15a, 15b, 16a, and 16b.

The locking part 3431 includes racks 34311a and 34312b, and a pinion 34313.

The pinion 34313 is engaged with at least one of a button 34311 and a stopper 34312, and transmits the power of the button 34311 to the stopper 34312.

A first pinion 34313a is arranged at a first side of the pinion 34313. Referring to FIGS. 15a, 15b, 16a, and 16b, the first pinion 34313a may be arranged at the lower side of the pinion 34313. The first pinion 34313a engages with a first rack 34311a formed on the button 34311.

A first pinion insertion recess 34311c is recessed inward from one surface of the button 34311, and the first pinion 34313a is inserted into first pinion insertion recess 34311c.

Referring to FIGS. 15a, 15b, 16a, and 16b, the first pinion insertion recess 34311c is formed by being recessed forward from the rear surface of the button 34311. The first pinion insertion recess 34311c may be formed in a U-shape with an open rear.

The first rack 34311a is formed on only one surface of two inner surfaces of the button 34311 facing the first pinion 34313a.

Referring to FIGS. 15a, 15b, 16a, and 16b, the first rack 34311a may be formed on only the right inner surface.

Alternatively, unlike what is shown in the drawing, the first rack 34311a may be formed on only the left inner surface. In this case, the pinion 34313 will rotate clockwise.

A second pinion 34313b is arranged at a second side of the pinion 34313. Referring to FIGS. 15a, 15b, 16a, and 16b, the second pinion 34313b may be arranged at the upper side of the pinion 34313. The second pinion 34313b engages with a second rack 34312b formed on the stopper 34312.

A second pinion insertion recess 34312c is recessed inward from one surface of the stopper 34312, and the second pinion 34313b is inserted into the second pinion insertion recess 34312c.

Referring to FIGS. 15a, 15b, 16a, and 16b, the second pinion insertion recess 34312c is formed by being recessed rearward from the front surface of the stopper 34312. The second pinion insertion recess 34312c may be formed in a U-shape with an open front.

The second rack 34312b is formed on only one surface which does not correspond to the first rack 34311a among two inner surfaces of the stopper 34312 facing the second pinion 34313b.

Referring to FIGS. 15a, 15b, 16a, and 16b, the second rack 34312b may be formed on only the left inner surface.

Alternatively, unlike what is shown in the drawing, the second rack 34312b may be formed on only the right inner surface.

The operation of the locking part 3431 according to the third embodiment will be described with reference to FIGS. 15a, 15b, 16a, and 16b.

When the connection tube 400 is positioned at a low angle, the button 34311 is operated by the button operating member 140 and moves rearward. When the button 34311 moves rearward, the pinion 34313 is rotated counterclockwise by the first rack 34311a and the first pinion 34313a. When the pinion 34313 rotates counterclockwise, the stopper 34312 is moved forward by the second pinion 34313b and the second rack 34312b. When the stopper 34312 is moved forward and is pulled out from the stopper receiving part 440a, the fixed steering part 440 may rotate.

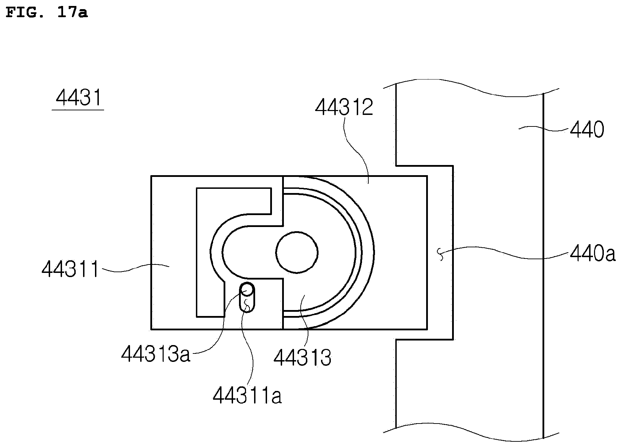

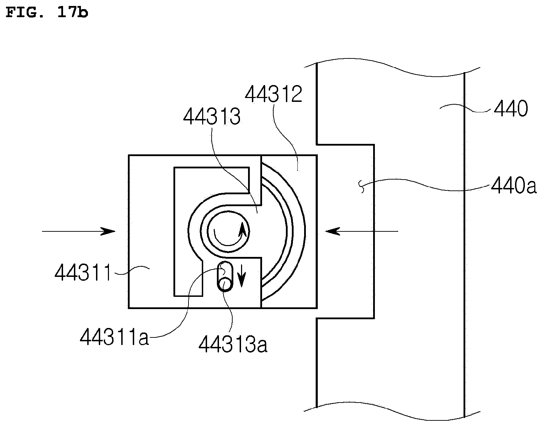

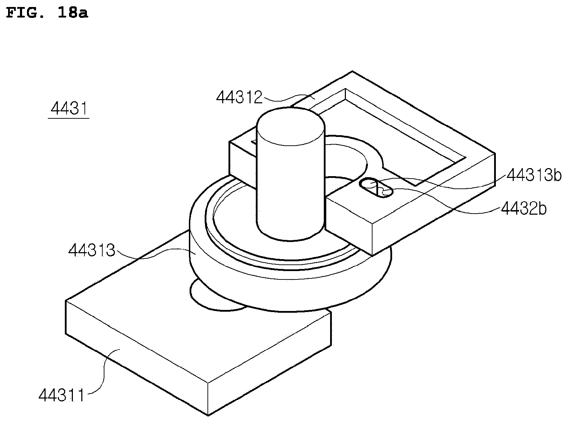

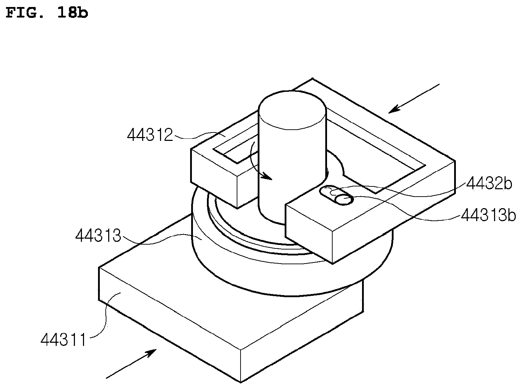

FIGS. 17a and 17b are bottom views of a locking part in a cleaner nozzle according to the fourth embodiment of the present invention, and FIGS. 18a and 18b are drawings approximately illustrating the locking part in the cleaner nozzle according to the fourth embodiment of the present invention.

Hereinafter, a locking part 4431 according to the fourth embodiment will be described with reference to FIGS. 17a, 17b, 18a, and 18b.

The locking part 4431 may include a transmission gear 44313.

The transmission gear 44313 transmits the power of a button 44311 to a stopper 44312.

The transmission gear 44313 may include a first guide 44313a and/or a second guide 44313b.

The first guide 44313a protrudes from a first surface of the transmission gear 44313, is connected to the button 44311, and rotates the transmission gear 44313 when the button 44311 is operated.

Referring to FIGS. 17a, 17b, 18a, and 18b, the first guide 44313a protrudes downward from the lower surface of the transmission gear 44313. A first slit 44311a is formed in the button 44311. The first guide 44313a may be inserted into the first slit 44311a and may slide.

The second guide 44313b protrudes from a second surface of the transmission gear 44313, is connected to the stopper 44312, and moves the stopper 44312 when the transmission gear 44313 rotates.

Referring to FIGS. 17a, 17b, 18a, and 18b, the second guide 44313b protrudes upward from the upper surface of the transmission gear 44313. A second slit 44312b is formed in the stopper 44312. The second guide 44313b may be inserted into the second slit 44312b and may slide.

The operation of the locking part 4431 according to the fourth embodiment will be described with reference to FIGS. 17a, 17b, 18a, and 18b.

When the connection tube 400 is positioned at a low angle, the button 44311 is operated by the button operating member 140 and moves rearward. When the button 44311 moves rearward, the first guide 44313a slides inside the first slit 44311a and moves rearward. When the first guide 44313a moves rearward, the transmission gear 44313 rotates counterclockwise. When the transmission gear 44313 rotates counterclockwise, the second guide 44313b moves forward. When the second guide 44313b moves forward, the second guide 44313b slides inside the second slit 44312b and moves the stopper 44312 forward. When the stopper 44312 is moved forward and is pulled out from the stopper receiving part 440a, the fixed steering part 440 may rotate.

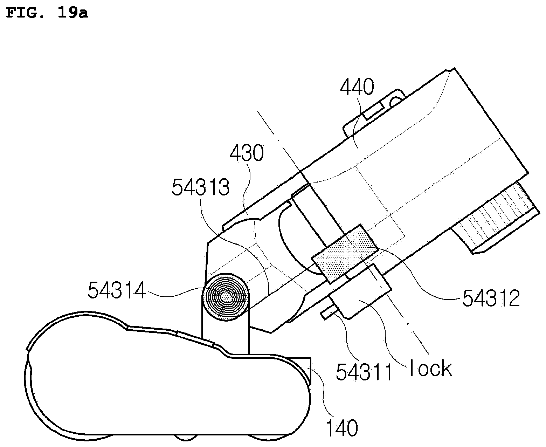

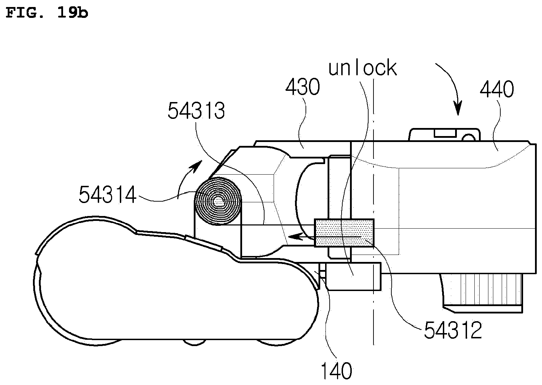

FIGS. 19a and 19b are schematic diagrams illustrating a locking part in a cleaner nozzle according to the fifth embodiment of the present invention.

Hereinafter, a locking part 5431 according to the fifth embodiment will be described with reference to FIGS. 19a and 19b.

The locking part 5431 may include a wire 54313 and a wire drum 54314.

The wire 54313 is connected to a stopper 54312.

The wire drum 54314 has the wire 54313 wound thereon and applies an external force to the stopper 54312 in a direction in which the stopper 54312 is pulled out.

The wire drum 54314 may be arranged in front of the stopper 54312.

A button 54311 fixes the stopper 54312 at a high angle and releases the stopper 54312 at a low angle. At the high angle, the button 54311 secures the stopper 54312, and the stopper 54312 is inserted into the stopper receiving part 440a to stop the rotation of the fixed steering part 440. At a low angle, the button 54311 releases the fixation of the stopper 54312, the stopper 54312 is moved forward by the tension of the wire 54313 and is pulled out from the stopper receiving part 440a, and the fixed steering part 440 may rotate.

Although the present invention has been described in detail through the specific embodiments, this is intended to specifically describe the present invention, but the present invention is not limited thereto.

Any simple modification or change of the present invention falls within the scope of the present invention, and the specific scope of protection of the present invention will be made clear by the appended claims.

## Claims

1. A cleaner nozzle comprising:
a nozzle housing (100) having a suction port (121) through which air containing dust is introduced;
a button operating member (140) formed on one side of the nozzle housing (100); and
a connection tube (400) having a flow path formed to communicate with the suction port (121),
wherein the connection tube (400) comprises:
a rotating steering part (430) arranged to be rotatable about a rotation axis thereof;
a fixed steering part (440) rotatably coupled to the rotating steering part (430); and
a locking part (431) configured to selectively secure the fixed steering part (440) to the rotating steering part (430),
wherein the locking part (431) comprises:
a button (4311) arranged on the rotating steering part (430) and operated by the button operating member (140) when an angle between a ground and the connection tube (400) is equal to or less than a predetermined angle; and
a stopper (4312) operated by the operation of the button (4311), with at least a portion of the stopper (4312) inserted into a stopper receiving part formed in the fixed steering part (440) when the button (4311) is not operated and pulled out from the stopper receiving part when the button (4311) is operated.

2. The cleaner nozzle of claim 1, further comprising:
a first agitator (200) rotatably coupled to the nozzle housing (100); and
a second agitator (300) rotatably coupled to the nozzle housing (100),
wherein the suction port (121) is formed between the first agitator (200) and the second agitator (300),
a diameter of the first agitator (200) is different from a diameter of the second agitator (300), and
an upper surface (110) of the nozzle housing (100) is formed to be inclined at a predetermined angle to the ground on the basis of a state in which the first agitator (200) and the second agitator (300) are in contact with the ground.

3. The cleaner nozzle of claim 1, wherein the button (4311) is operated by being pressed in a direction intersecting a moving direction thereof.

4. The cleaner nozzle of claim 3, wherein the locking part (431) has a hole formed in the button (4311), and
further comprises a release hook arranged on the button operating member (140) and configured to move the button (4311) when the release hook is inserted into the hole of the button (4311).

5. The cleaner nozzle of claim 1, wherein the stopper (4312) comprises:
a hinge coupled to the rotating steering part (430) and configured to serve as a center shaft of rotation;
a button close-contact part extending radially outward from the hinge of the stopper, being in close contact with the button (4311), and configured to rotate about the hinge of the stopper when the button (4311) is operated; and
an insertion part extending from the hinge of the stopper in a direction different from a direction in which the button close-contact part extends, and configured to be inserted into a recess formed in the fixed steering part (440) when the button (4311) is not operated.

6. The cleaner nozzle of claim 1, wherein the locking part (431) comprises
a pinion gear-engaged with at least one of the button (4311) and the stopper (4312), and configured to transmit power of the button (4311) to the stopper (4312).

7. The cleaner nozzle of claim 6, wherein the locking part (431) comprises:
a first pinion arranged at a first side of the pinion;
a first pinion insertion recess recessed inward from one surface of the button (4311) and into which the first pinion is inserted;
a first rack formed on only one surface of two inner surfaces of the button (4311) facing the first pinion;
a second pinion arranged at a second side of the pinion;
a second pinion insertion recess recessed inward from one surface of the stopper (4312) and into which the second pinion is inserted; and
a second rack formed on only one surface which does not correspond to the first rack among two inner surfaces of the stopper (4312) facing the second pinion.

8. The cleaner nozzle of claim 1, wherein the locking part (431) comprises:
a transmission gear configured to transmit power of the button (4311) to the stopper (4312); and
a first guide protruding from a first surface of the transmission gear, connected to the button (4311), and configured to rotate the transmission gear when the button (4311) is operated.

9. The cleaner nozzle of claim 1, wherein the locking part (431) comprises:
a transmission gear configured to transmit power of the button (4311) to the stopper (4312); and
a second guide protruding from a second surface of the transmission gear, connected to the stopper (4312), and configured to move the stopper (4312) when the transmission gear rotates.

10. The cleaner nozzle of claim 1, wherein the locking part (431) comprises:
a wire connected to the stopper (4312); and
a wire drum on which the wire is wound and which applies an external force to the stopper (4312) in a direction in which the stopper (4312) is pulled out.

11. The cleaner nozzle of claim 1, wherein the connection tube (400) comprises:
a first steering part (420) hingedly coupled to the nozzle housing (100) and configured to yaw the connection tube (400);
a second steering part (430) hingedly coupled to the first steering part (420) and configured to pitch the connection tube (400); and
a third steering part (440) hingedly coupled to the second steering part (430) and configured to roll the connection tube (400),
wherein the fixed steering part (440) is the third steering part (440).

12. The cleaner nozzle of claim 11, wherein the rotating steering part (430) is the second steering part (430).

13. The cleaner nozzle of claim 1, wherein the button (4311) is inserted into the rotating steering part (430) while being pressed by the button operating member (140) during the operation of the button (4311), and
the stopper (4312) is pulled out from a recess formed in the fixed steering part (440) while being inserted into the rotating steering part (430) during the operation of the button (4311).

14. The cleaner nozzle of claim 13, wherein a direction in which the button (4311) is inserted and a direction in which the stopper (4312) is inserted are opposite to each other.

## Patentansprüche

1. Staubsaugerdüse, die aufweist:
ein Düsengehäuse (100) mit einer Ansaugöffnung (121), durch die Staub enthaltende Luft eingeleitet wird;
ein Knopfbetätigungselement (140), das an einer Seite des Düsengehäuses (100) ausgebildet ist; und
ein Verbindungsrohr (400) mit einem Strömungsweg, der so ausgebildet ist, dass er mit der Ansaugöffnung (121) in Verbindung steht,
wobei das Verbindungsrohr (400) aufweist:
einen drehbaren Lenkteil (430), der so angeordnet ist, dass er um seine Drehachse drehbar ist;
einen feststehenden Lenkteil (440), der drehbar mit dem drehbaren Lenkteil (430) gekoppelt ist; und
einen Verriegelungsteil (431), der konfiguriert ist, den feststehenden Lenkteil (440) selektiv am drehbaren Lenkteil (430) zu sichern,
wobei der Verriegelungsteil (431) aufweist:
einen Knopf (4311), der am drehbaren Lenkteil (430) angeordnet ist und durch das Knopfbetätigungselement (140) betätigt wird, wenn ein Winkel zwischen einem Boden und dem Verbindungsrohr (400) gleich oder kleiner als ein vorbestimmter Winkel ist; und
einen Anschlag (4312), der durch die Betätigung des Knopfes (4311) betätigt wird, wobei mindestens ein Abschnitt des Anschlags (4312) in einen Anschlagaufnahmeteil eingeführt ist, der im feststehenden Lenkteil (440) ausgebildet ist, wenn der Knopf (4311) nicht betätigt wird, und aus dem Anschlagaufnahmeteil herausgezogen wird, wenn der Knopf (4311) betätigt wird.

2. Staubsaugerdüse nach Anspruch 1, die ferner aufweist:
eine erste Bürstenwalze (200), die drehbar mit dem Düsengehäuse (100) gekoppelt ist; und
eine zweite Bürstenwalze (300), die drehbar mit dem Düsengehäuse (100) gekoppelt ist, wobei die Ansaugöffnung (121) zwischen der ersten Bürstenwalze (200) und der zweiten Bürstenwalze (300) ausgebildet ist,
sich der Durchmesser der ersten Bürstenwalze (200) von dem Durchmesser der zweiten Bürstenwalze (300) unterscheidet, und
eine Oberseite (110) des Düsengehäuses (100) so ausgebildet ist, dass sie in einem vorbestimmten Winkel zum Boden geneigt ist, auf Grundlage eines Zustands, in dem die erste Bürstenwalze (200) und die zweite Bürstenwalze (300) mit dem Boden in Kontakt stehen.

3. Staubsaugerdüse nach Anspruch 1, wobei der Knopf (4311) betätigt wird, indem er in einer Richtung gedrückt wird, die seine Bewegungsrichtung schneidet.

4. Staubsaugerdüse nach Anspruch 3, wobei der Verriegelungsteil (431) ein im Knopf (4311) ausgebildetes Loch aufweist, und
ferner einen Freigabehaken aufweist, der an dem Knopfbetätigungselement (140) angeordnet und konfiguriert ist, den Knopf (4311) zu bewegen, wenn der Freigabehaken in das Loch des Knopfes (4311) eingeführt wird.

5. Staubsaugerdüse nach Anspruch 1, wobei der Anschlag (4312) aufweist:
ein Scharnier, das mit dem drehbaren Lenkteil (430) gekoppelt und so konfiguriert ist, dass es als Mittelachse der Drehung dient;
einen Teil in engem Kontakt mit dem Knopf, der sich radial nach außen vom Scharnier des Anschlags erstreckt, in engem Kontakt mit dem Knopf (4311) steht und konfiguriert ist, sich um das Scharnier des Anschlags zu drehen, wenn der Knopf (4311) betätigt wird; und
einen Einführteil, der sich vom Scharnier des Anschlags in einer Richtung erstreckt, die sich von der Richtung unterscheidet, in der sich der Teil in engem Kontakt mit dem Knopf erstreckt, und konfiguriert ist, in eine Aussparung eingeführt zu werden, die im feststehenden Lenkteil (440) ausgebildet ist, wenn der Knopf (4311) nicht betätigt wird.

6. Staubsaugerdüse nach Anspruch 1, wobei der Verriegelungsteil (431) aufweist
ein Ritzel, das mit mindestens einem des Knopfes (4311) und des Anschlags (4312) in Zahnradeingriff steht und konfiguriert ist, die Kraft des Knopfes (4311) auf den Anschlag (4312) zu übertragen.

7. Staubsaugerdüse nach Anspruch 6, wobei der Verriegelungsteil (431) aufweist:
ein erstes Ritzel, das an einer ersten Seite des Ritzels angeordnet ist;
eine erste Ritzel-Einsetzaussparung, die von einer Oberfläche des Knopfes (4311) nach innen ausgespart ist und in die das erste Ritzel eingesetzt ist;
eine erste Zahnstange, die nur an einer Fläche von zwei dem ersten Ritzel zugewandten Innenflächen des Knopfes (4311) ausgebildet ist;
ein zweites Ritzel, das an einer zweiten Seite des Ritzels angeordnet ist;
eine zweite Ritzel-Einsetzaussparung, die von einer Oberfläche des Anschlags (4312) nach innen ausgespart ist und in die das zweite Ritzel eingesetzt ist; und
eine zweite Zahnstange, die nur auf einer Fläche, die nicht der ersten Zahnstange entspricht, unter zwei dem zweiten Ritzel zugewandten Innenflächen des Anschlags (4312) ausgebildet ist.

8. Staubsaugerdüse nach Anspruch 1, wobei der Verriegelungsteil (431) aufweist:
ein Übertragungszahnrad, das konfiguriert ist, die Kraft des Knopfes (4311) auf den Anschlag (4312) zu übertragen; und
eine erste Führung, die aus einer ersten Fläche des Übertragungszahnrads vorsteht, mit dem Knopf (4311) verbunden ist und konfiguriert ist, das Übertragungszahnrad zu drehen, wenn der Knopf (4311) betätigt wird.

9. Staubsaugerdüse nach Anspruch 1, wobei der Verriegelungsteil (431) aufweist:
ein Übertragungszahnrad, das konfiguriert ist, die Kraft des Knopfes (4311) auf den Anschlag (4312) zu übertragen; und
eine zweite Führung, die von einer zweiten Fläche des Übertragungszahnrads vorsteht, mit dem Anschlag (4312) verbunden ist und konfiguriert ist, den Anschlag (4312) zu bewegen, wenn sich das Übertragungszahnrad dreht.

10. Staubsaugerdüse nach Anspruch 1, wobei der Verriegelungsteil (431) aufweist:
einen Draht, der mit dem Anschlag (4312) verbunden ist; und
eine Drahttrommel, auf die der Draht aufgewickelt ist und die eine äußere Kraft auf den Anschlag (4312) in einer Richtung ausübt, in der der Anschlag (4312) herausgezogen wird.

11. Staubsaugerdüse nach Anspruch 1, wobei das Verbindungsrohr (400) aufweist:
einen ersten Lenkteil (420), der gelenkig mit dem Düsengehäuse (100) gekoppelt und konfiguriert ist, das Verbindungsrohr (400) zu gieren;
einen zweiten Lenkteil (430), der gelenkig mit dem ersten Lenkteil (420) gekoppelt und konfiguriert ist das Verbindungsrohr (400) zu nicken; und
einen dritten Lenkteil (440), der gelenkig mit dem zweiten Lenkteil (430) gekoppelt und konfiguriert ist, das Verbindungsrohr (400) zu rollen,
wobei der feststehende Lenkteil (440) der dritte Lenkteil (440) ist.

12. Staubsaugerdüse nach Anspruch 11, wobei der drehbare Lenkteil (430) der zweite Lenkteil (430) ist.

13. Staubsaugerdüse nach Anspruch 1, wobei der Knopf (4311) in den drehbaren Lenkteil (430) eingeführt wird, während er durch das Knopfbetätigungselement (140) während der Betätigung des Knopfes (4311) gedrückt wird, und
der Anschlag (4312) aus einer Aussparung herausgezogen wird, die im feststehenden Lenkteil (440) ausgebildet ist, während er in den drehbaren Lenkteil (430) während der Betätigung des Knopfes (4311) eingeführt wird.

14. Staubsaugerdüse nach Anspruch 13, wobei eine Richtung, in der der Knopf (4311) eingeführt wird, und eine Richtung, in der der Anschlag (4312) eingeführt wird, zueinander entgegengesetzt sind.

## Revendications

1. Suceur d'aspirateur, comprenant :
un boîtier de suceur (100) présentant un orifice d'aspiration (121) par lequel de l'air contenant de la poussière est introduit ;
un élément d'actionnement de bouton (140) formé sur un côté du boîtier de suceur (100) ; et
une tubulure de connexion (400) présentant un passage d'écoulement formé de manière à communiquer avec l'orifice d'aspiration (121),
où la tubulure de connexion (400) comprend :
une pièce de direction rotative (430) agencée de manière à être rotative autour de son axe de rotation ;
une pièce de direction fixe (440) raccordée de manière rotative à la pièce de direction rotative (430) ; et
une pièce de verrouillage (431) prévue pour fixer de manière sélective la pièce de direction fixe (440) à la pièce de direction rotative (430),
où la pièce de verrouillage (431) comprend :
un bouton (4311) disposé sur la pièce de direction rotative (430) et actionné par l'élément d'actionnement de bouton (140) lorsqu'un angle entre un plancher et la tubulure de connexion (400) est égal ou inférieur à un angle prédéterminé ; et
une butée (4312) actionnée par actionnement du bouton (4311), au moins une partie de ladite butée (4312) étant insérée dans une partie de réception de butée formée dans la pièce de direction fixe (440) lorsque le bouton (4311) n'est pas actionné, et retirée de la partie de réception de butée lorsque le bouton (4311) est actionné.

2. Suceur d'aspirateur selon la revendication 1, comprenant en outre :
un premier agitateur (200) raccordé de manière rotative au boîtier de suceur (100) ; et
un deuxième agitateur (300) raccordé de manière rotative au boîtier de suceur (100),
où l'orifice d'aspiration (121) est formé entre le premier agitateur (200) et le deuxième agitateur (300),
le diamètre du premier agitateur (200) est différent du diamètre du deuxième agitateur (300), et
une surface supérieure (110) du boîtier de suceur (100) est formée de manière à être inclinée suivant un angle prédéterminé par rapport au plancher, sur la base d'un état où le premier agitateur (200) et le deuxième agitateur (300) sont en contact avec le plancher.

3. Suceur d'aspirateur selon la revendication 1, où le bouton (4311) est actionné en étant enfoncé dans une direction croisant sa direction de déplacement.

4. Suceur d'aspirateur selon la revendication 3, où la pièce de verrouillage (431) présente un trou formé dans le bouton (4311), et
comprend en outre un crochet de déverrouillage disposé sur l'élément d'actionnement du bouton (140) et prévu pour déplacer le bouton (4311) lorsque ledit crochet de déverrouillage est inséré dans le trou du bouton (4311).

5. Suceur d'aspirateur selon la revendication 1, où la butée (4312) comprend :
une charnière raccordée à la pièce de direction rotative (430) et prévue pour servir d'axe de rotation central ;
une pièce de contact étroit avec le bouton s'étendant radialement vers l'extérieur à partir de la charnière de la butée, étant en contact étroit avec le bouton (4311), et prévue pour tourner autour de la charnière de la butée lorsque le bouton (4311) est actionné ; et
une pièce d'insertion s'étendant depuis la charnière de la butée dans une direction différente de la direction d'extension de la pièce en contact étroit avec le bouton, et prévue pour être insérée dans un évidement formé dans la pièce de direction fixe (440) lorsque le bouton (4311) n'est pas actionné.

6. Suceur d'aspirateur selon la revendication 1, où la pièce de verrouillage (431) comprend un pignon engrené avec au moins l'un du bouton (4311) et de la butée (4312), et prévu pour transmettre la force exercée sur le bouton (4311) à la butée (4312).

7. Suceur d'aspirateur selon la revendication 6, où la pièce de verrouillage (431) comprend :
un premier pignon disposé sur un premier côté du pignon ;
un premier évidement d'insertion de pignon, ménagé vers l'intérieur à partir d'une surface du bouton (4311) et dans lequel est inséré le premier pignon ;
une première crémaillère formée sur une seule des deux surfaces intérieures du bouton (4311) faisant face au premier pignon ;
un deuxième pignon disposé sur un deuxième côté du pignon ;
un deuxième évidement d'insertion de pignon, ménagé vers l'intérieur à partir d'une surface de la butée (4312) et dans lequel le deuxième pignon est inséré ; et
une deuxième crémaillère formée sur une seule surface ne correspondant pas à la première crémaillère entre les deux surfaces intérieures de la butée (4312) faisant face au deuxième pignon.

8. Suceur d'aspirateur selon la revendication 1, où la pièce de verrouillage (431) comprend :
un engrenage de transmission prévu pour transmettre la force du bouton (4311) à la butée (4312) ; et
un premier guidage faisant saillie d'une première surface de l'engrenage de transmission, raccordé au bouton (4311), et prévu pour faire tourner l'engrenage de transmission lorsque le bouton (4311) est actionné.

9. Suceur d'aspirateur selon la revendication 1, où la pièce de verrouillage (431) comprend :
un engrenage de transmission prévu pour transmettre la force du bouton (4311) à la butée (4312) ; et
un deuxième guidage faisant saillie depuis une deuxième surface de l'engrenage de transmission, raccordé à la butée (4312), et prévu pour déplacer la butée (4312) lorsque l'engrenage de transmission tourne.

10. Suceur d'aspirateur selon la revendication 1, où la pièce de verrouillage (431) comprend :
un câble relié à la butée (4312) ; et
un tambour sur lequel le câble est enroulé et qui applique une force extérieure sur la butée (4312) dans une direction où la butée (4312) est tirée vers l'extérieur.

11. Suceur d'aspirateur selon la revendication 1, où la tubulure de connexion (400) comprend :
une première pièce de direction (420) raccordée de manière articulée au boîtier de suceur (100) et prévue pour faire osciller la tubulure de connexion (400) ;
une deuxième pièce de direction (430) raccordée de manière articulée à la première pièce de direction (420) et prévue pour faire monter la tubulure de connexion (400) ; et
une troisième pièce de direction (440) raccordée de manière articulée à la deuxième pièce de direction (430) et prévue pour faire tourner la tubulure de connexion (400),
la pièce de direction fixe (440) étant la troisième pièce de direction (440).

12. Suceur d'aspirateur selon la revendication 11, où la pièce de direction rotative (430) est la deuxième pièce de direction (430).

13. Suceur d'aspirateur selon la revendication 1, où le bouton (4311) est inséré dans la pièce de direction rotative (430) en étant enfoncé par l'élément d'actionnement de bouton (140) lors de l'actionnement du bouton (4311), et
la butée (4312) est extraite d'un évidement formé dans la pièce de direction fixe (440) en étant insérée dans la pièce de direction rotative (430) lors de l'actionnement du bouton (4311).

14. Suceur d'aspirateur selon la revendication 13, où la direction d'insertion du bouton (4311) et la direction d'insertion de la butée (4312) sont opposées l'une à l'autre.
